(19) Europäisches Patentamt
European Patent Office
Office européen des brevets

(11) EP 1 909 270 A1

(12) EUROPEAN PATENT APPLICATION

(43) Date of publication:
09.04.2008 Bulletin 2008/15

(51) Int Cl.:
G11B 7/09 (2006.01)          G11B 7/22 (2006.01)
G11B 7/13 (2006.01)          G11B 7/135 (2006.01)

(21) Application number: 07117624.2

(22) Date of filing: 01.10.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(30) Priority: 02.10.2006 JP 2006270909

(71) Applicant: Mitsumi Electric Co., Ltd.
Tama-Shi,
Tokyo (JP)

(72) Inventors:
• Okuyama, Yoshihiro
Mitsumi Electric Co.Ltd.
Yamagata (JP)
• Sekine, Hisamichi
Mitsumi Electric Co. Ltd.
Tokyo (JP)

(74) Representative: Tetzner, Michael et al
Anwaltskanzlei Dr. Tetzner
Van-Gogh-Strasse 3
81479 München (DE)

(54) **Photodetector capable of correctly carrying out phase adjusment**

(57)    A photodetector (35) has a photo-receiving portion (35-2) for receiving a return beam consisting of a main beam, a leading sub beam, and a trailing sub beam to produce photo-received signals and a processing circuit (350) for processing the photo-received signals to produce main and sub processed signals. The photo-receiving portion (35-2) includes a group of leading sub photo-receiving elements (E1, F1, G1, H1) for receiving the leading sub beam to produce leading sub photo-received signals and a group of trailing sub photo-receiving elements (E2, F2, G2, H2) for receiving the trailing sub beam to produce trailing sub photo-received signals. The processing circuit (350) is configured to produce, in a normal mode, as the sub processed signals, added signals ((E1 + E2), (F1 + F2), (G1 + G2), (H1 + H2)) obtained by adding the leading sub photo-received signals and the trailing sub photo-receiving signals and to produce, in a test mode, as the sub processed signals, signals (E1, F1, G1, H1) obtained by processing only the leading photo-received signals.

FIG. 6

**Description**

This application is based upon and claims the benefit of priority from Japanese patent application JP 2006-270909, filed on October 2, 2006, the disclosure of which is incorporated herein in its entirety by reference.

Background of the Invention:

This invention relates to an optical pickup unit and, in particular, to a three-wavelength holding optical pickup unit which is enable to carry out recording or reproducing for three kinds of optical discs by selectively using three kinds of laser beams having different wavelengths.

As well know in the art, an optical disc drive is a device for reading/writing information from/into an optical disc (CD, CD-ROM, CD-R/RW, DVD-ROM, DVD±R/RW, Blu-ray disc, HD-DVD, or the like). In order to achieve reading/ writing the information from/into the optical disc, the optical disc drive of this type comprises an optical pickup unit for irradiating a laser beam onto the optical disc and for detecting its reflected beam.

In the manner which is well known in the art, in DVD apparatuses, there is one in which a particular optical pickup unit is mounted in order to enable to record/reproduce data in/from both of a digital versatile disc (DVD) and a compact disc (CD). The particular optical pickup unit of the type is for carrying out recording or reproducing by selectively using two kinds of laser beams, namely, a laser beam having a short wavelength (a wavelength band of 650 nm) for the DVD and a laser beam having a long wavelength (a wavelength band of 780 nm) for the CD. The particular optical pickup unit is called a two-wavelength handling optical pickup unit.

One of the two-wavelength handling optical pickup units of the type described comprises a first laser diode (LD) for emitting or irradiating the laser beam (a first laser beam) having the short wavelength for the DVD and a second laser diode (LD) for emitting or irradiating the laser beam (a second laser beam) having the long wavelength for the CD. Such a two-wavelength handling optical pickup unit is disclosed in Japanese Unexamined Patent Application Publication No. 2003-173563 or JP-A 2003-173563.

However, if the first laser diode and the second laser diode are formed as separate parts, it is inconvenient that the two-wavelength handling optical pickup unit comprises a lot of parts and is large-scale. In order to cope with such problems, a new laser diode comprising, as one part (one chip), the first laser diode and the second laser diode is developed and proposed, for example, in Japanese Unexamined Patent Application Publication No. 11-149652 or JP-A 11-149652. Such a new laser diode is called a one-chip type laser diode. It is possible to miniaturize the two-wavelength handling optical pickup unit by using the one-chip type laser diode. Inasmuch as the one-chip type laser diode has a first emission point for emitting the first laser beam and a second emission point for the second laser beam that are apart from each other by a predetermined distance of, for example, $100\mu m$, the first laser beam and the second laser beam are emitted or irradiated in parallel with they apart from each other by the predetermined distance.

Furthermore, in recent DVD apparatuses, it has been developed one in which a special optical pickup unit is mounted in order to enable to record/reproduce data in/from not only the DVD and the CD but also a high definition DVD (HD-DVD). The special optical pickup unit of the type is for carrying out recording or reproducing by selectively using three kinds of laser beams, namely, a laser beam having a middle wavelength (a wavelength band of 650 nm) for the DVD, a laser beam having a long wavelength (a wavelength band of 780 nm) for the CD, and a laser beam having a short wavelength (wavelength band of 410 nm) for the HD-DVD. The special optical pickup unit is called a three-wavelength handling optical pickup unit.

Such a three-wavelength handling optical pickup unit may use the one-chip type laser diode (a two-wavelength one-package laser diode) for the CD and the DVD such as is disclosed in the above-mentioned JP-A 11-149652 and a blue laser diode for the HD-DVD. In addition, the HD-DVD will hereafter be also abbreviated as HD.

In general, an optical pickup unit comprises a laser beam source for irradiating a laser beam and an optical system for guiding the irradiated laser beam to an optical disc and for guiding its reflected beam to a photodetector. The optical system includes an objective lens disposed so as to face the optical disc. The laser beam source and the photodetector are mounted on an outer side wall of an optical base while the optical system except for the objective lens is mounted in the optical base.

It is necessary for the objective lens used in the optical pickup unit to accurately control in position with respect to a focus direction along an optical axis and a track direction along a radial direction of the optical disc to thereby accurately focus the laser beam on a track of a signal recording surface of the rotating optical disc. These controls are called a focusing control and a tracking control, respectively. Further, following improvement in recording density, there have recently been increasing demands for removing or suppressing the influence caused by warping of the optical disc. In view of this, it is also necessary that the objective lens be subjected to a so-called tilting control.

An optical pickup actuator is a device for enabling the focusing control, the tracking control, and the tilting control. The optical pickup actuator is called an objective lens driving device. In the objective lens driving device, an objective lens holder holding the objective lens is elastically supported by a suspension member with respect to a damper base. The suspension member consists of a plurality of suspension wires disposed both sides of the damper base and the objective lens holder (see, for example, Japanese Unexamined Patent Application Publication No. 2003-196865 or JP-A 2003-196865).

Now, the objective lens driving devices are classified into a so-called symmetry type and a so-called asymmetry type. The objective lens driving devices of the symmetry type are ones wherein coils and a magnetic circuit including magnets are symmetrically disposed with respect to the objective lens as a center. The objective lens driving devices of the asymmetry type are ones wherein the coils and the magnetic circuit including magnets are asymmetrically disposed with respect to the objective lens.

One of the objective lens driving devices of the symmetry type is disclosed, for example, in Japanese Unexamined Patent Application Publication No. 2001-93177 or JP-A2001-93177. According to the JP-A2001-93177, the objective lens driving device of the symmetry type comprises an objective lens holder for holding an objective lens, a focusing coil wound around the objective lens holder, tracking coils affixed to the objective lens holder at outer sides in a tangential direction of an optical disc, and tilting coils affixed to the objective lens holder at both sides in a radial direction of the optical disc. These coils are partly located in gaps of the magnetic circuit. With this structure, the objective lens driving device of the symmetry type is capable of finely controlling a position and an inclination of the objective lens by controlling currents flowing through the respective coils. In addition, inasmuch as it is necessary to affix the tracking coils and the tilting coils to the sides of the objective lens holder, each of the tracking coils and the tilting coils comprises an air-core coil.

In the manner which is described above, it is necessary for the optical pickup unit to irradiate the laser beam produced by the laser beam source on a predetermined track of the optical disc. For such tracking control, tracking servo methods using three beams are used up to now (see, for example, Japanese Unexamined Patent Application Publication No. 2005-339646 or JP-A 2005-339646 which corresponds to United States Patent Application Publication No. US 2005/0265203 A1). In the manner known in the art, the tracking servo methods using three beams are classified into two kinds of methods: a three beam method and a DPP (differential push-pull) method according to difference between methods of generating a tracking error signal. Both of three beam method and the DPP method divide the laser beam produced by the laser optical source by a diffraction grating into three beams which consists of a zero-order diffracted beam and a pair of first-order diffracted beams. The zero-order diffracted beam is called a main beam while the pair of first-order diffracted beams are called sub beams. In the pair of first-order diffracted beams, one crossing the track first is called a leading sub beam while another crossing the track later is called a trailing sub beam. Among the instant specification, the leading sub beam is called a first sub beam while the trailing sub beam is called a second sub beam.

In the three beam method, the leading sub beam and the trailing sub beam are disposed so that a phase difference therebetween becomes 180 degrees in terms of a phase of a track crossing signal. In addition, in the three beam method, a track error signal is generated by subtracting a signal (a received signal of a photo-detector) due to a spot of the trailing sub beam from another signal (another received signal of the photo-detector) due to anther spot of the leading sub beam. As a result, it is possible to stably reproduce a recorded medium (an optical disc). Such a three beam method is used in a case of reproducing a CD (compact disc).

On the other hand, in the DPP method, a push-pull signal due to a spot of the leading sub beam is called a leading sub push-pull signal, a push-pull signal due to a spot ot the trailing sub beam is called a trailing sub push-pull signal, and a push-pull signal due to a spot of the main beam is called a main push-pull signal. A tracking error signal is generated by subtracting an added signal obtained by adding the leading sub push-pull signal and the trailing sub push-pull signal from the main push-pull signal. In the DPP method, it is necessary to dispose the leading sub beam and the trailing sub beam so that a phase difference therebetween becomes 360 degrees in terms of a phase of the track crossing signal. In other words, it is necessary to dispose the main beam, the leading sub beam, and the trailing sub beam so that a phase difference between the main beam and the leading sub beam or the trailing sub beam becomes 180 degrees in the terms of a phase of the track crossing signal.

In such a DPP method, it is possible to remain only a push-pull signal as the tracking error signal by subtracting the added signal obtained by adding the leading sub push-pull signal and the trailing sub push-pull signal from the main push-pull signal. As a result, the DPP method is advantageous in that it is possible to cancel an offset component of the push-pull signal caused by a tilt of the optical disc and a shift of an objective lens.

At any rate, in the DPP method, on phase-adjustment in an assembly process of the optical pickup units, it is necessary to adjust the diffraction grating so that the phase difference between the main beam and the leading sub beam becomes 180 degrees.

In a conventional photodetector for receiving the reflected beam (the return beam) from a HD-DVD, as an output signal of the sub beams side is used an added signal obtained by adding a leading sub received signal produced by a group of leading sub receiving elements for receiving the leading sub beam with a trailing sub received signal produced by a group of trailing sub receiving elements for receiving the trailing sub beam. This is because, in a case of using the DPP method as the tracking servo method, it is possible to decrease the number of output pins of the photo-detector when the above-mentioned added signal obtained by preliminarily addition processing in a processing circuit in the photodetector is produced on computing a tracking error signal (DDP signal).

On the other hand, in the manner which is described above, on phase-adjustment in the assembly process of the optical pickup units, it is necessary to adjust the diffraction grating so that the phase difference between the main beam and the leading sub beam becomes 180 degrees.

However, the conventional photodetector cannot pull only the leading sub received signal out because the added signal obtained by adding the leading sub received signal and the trailing sub received signal is used as the output signal for the sub beam. Therefore, in the optical pickup unit using the conventional photodetector, a phase adjustment must be carried out using a main received signal and the added signal. In this event, it is difficult to correctly phase-adjust so that the phase difference between the main beam and the leading sub beam becomes 180 degrees because the above-mentioned added signal includes a phase signal for the trailing sub beam.

Summary of the Invention:

It is therefore an object of the present invention to provide a photodetector which is capable of correctly carrying out a phase adjustment in an optical pickup unit using a DPP method as a tracking servo method.

Other objects of this invention will become clear as the description proceeds.

On describing the gist of this invention, it is possible to be understood that a photodetector comprises a photo-receiving portion receiving a return beam from an optical disc and a processing circuit. The return beam comprises a main beam, a leading sub beam, and a trailing beam. The photo-receiving portion comprises a group of main photo-receiving elements for receiving the main beam to produce main photo-received signals, a group of leading sub photo-receiving elements for receiving the leading sub beam to produce leading sub photo-receiving signals, and a group of trailing sub photo-receiving elements for receiving the trailing sub beam to produce trailing sub photo-received signals. The processing circuit is for processing the main photo-received signals, the leading sub photo-received signals, and the trailing sub photo-received signals to produce main processed signals and sub processed signals. According to an aspect of this invention, in the afore-mentioned photodetector, the processing circuit is configured to produce, in a normal mode, as the sub processed signals, added signals obtained by adding the leading sub photo-received signals and the trailing sub photo-received signals and to produce, in a test mode, as the sub processed signals, signals obtained by processing only the leading sub photo-received signals.

In the afore-mentioned photodetector, the processing circuit may comprise a main processing circuit for processing the main photo-received signals to produce the main processed signals and a sub processing circuit for processing the leading sub photo-received signals and the trailing sub photo-received signals to produce the sub processed signals. In this event, the sub processing circuit produces, in the normal mode, as the sub processed signals, the added signals obtained by adding the leading sub photo-received signals and the trailing sub photo-received signals by connecting the group of the leading sub photo-receiving elements in parallel with the group of the trailing sub photo-receiving elements. And, the sub processing circuit produces, in the test mode, as the sub processed signals, the signals obtained by processing only the leading sub photo-receiving signals by detaching the group of the trailing sub photo-receiving elements from the group of the leading sub photo-receiving elements.

On the gist of this invention, it is possible to be understood that an optical pickup unit using a differential push-pull (DPP) method as a tracking servo method comprises a laser beam source for irradiating a leaser beam as an irradiated beam, a photodetector, and an optical system for guiding the irradiated beam to an optical disc and for guiding its reflected beam to the photodetector as a return beam. The optical system includes a diffraction grating for dividing the irradiated beam into a main beam, a leading sub beam, and a trailing sub beam and an objective lens disposed so as to face to the optical disc. The photodetector comprises a photo-receiving portion for receiving the return beam and a processing circuit. The photo-receiving portion comprises a group of main photo-receiving elements for receiving the main beam to produce main photo-received signals, a group of leading sub photo-receiving elements for receiving the leading sub beam to produce leading sub photo-received signals, and a group of trailing sub photo-receiving elements for receiving the trailing sub beam to produce trailing sub photo-received signals. The processing circuit is for processing the main photo-received signals, the leading sub photo-received signals, and the trailing sub photo-received signals to produce main processed signals and sub processed signals. According to an aspect of this invention, in the afore-mentioned optical pickup unit, the processing circuit is configured to produce, in a normal mode, as the sub processed signals, added signals obtained by adding the leading sub photo-received signals and the trailing sub photo-received signals and to produce, in a test mode, as the sub processed signals, signals obtained by processing only the leading sub photo-received signals.

In the afore-mentioned optical pickup unit, the processing circuit may comprise a main processing circuit for processing the main photo-received signals to produce the main processed signals, and a sub processing circuit for processing the leading sub photo-received signals and the trailing sub photo-received signals to produce the sub processed signals. In this event, the sub processing circuit produces, in the normal mode, as the sub processed signals, the added signals obtained by adding the sub photo-received signals and the trailing sub photo-received signals by connecting the group of the leading sub photo-receiving elements in parallel with the group of the trailing sub photo-receiving elements. And, the sub processing circuit produces, in the test mode, as the sub processed signals, the signals obtained by processing only the leading sub photo-received signals by detaching the group of the trailing sub photo-receiving elements from the group of the leading sub photo-receiving elements.

Brief Description of the Drawings:

Fig. 1 is a system configuration view of an optical system of a three-wavelength handling optical pickup unit to which this invention is applicable;
Fig. 2 is a view showing a structure of a photo-receiving portion in a photodetector according to an embodiment of this invention that is used in the three-wavelength handling optical pickup unit illustrated in Fig. 1;
Fig. 3 is a block diagram of the photodetector according to the embodiment of this invention;
Fig. 4 is a block diagram of a main processing circuit in a processing circuit included in the photodetector illustrated in Fig. 3 together with a gain control circuit and a mode control circuit;
Fig. 5 is a block diagram of a sub processing circuit in the processing circuit included in the photodetector illustrated in Fig. 3 in a normal mode together with the gain control circuit and the mode control circuit;
Fig. 6 is a block diagram of the sub processing circuit in the processing circuit included in the photodetector illustrated in Fig. 3 in a test mode together with the gain control circuit and the mode control circuit;
Fig. 7 is a view showing a truth table of signal levels;
Fig. 8 is a view showing output signals produced by the processing circuit in the photodetector in the normal mode;
Fig. 9 is a view showing a relationship between input signals supplied to the processing circuit in the photodetector illustrated in Fig. 3 and an operation mode;
Fig. 10 is a view showing output signals produced by the processing circuit in the photodetector in the test mode;
Fig. 11 is a view showing Lissajous figure displayed on a screen of an oscilloscope;
Figs. 12A and 12B are a view showing gain characteristics of amplifiers constituting the processing circuit that are controlled by the gain control circuit on the basis of first and second switch signals in a case where an HD (HD-DVD) or a DVD is selected by the mode control circuit illustrated in Figs. 4 through 6; and
Figs. 13A and 13B are a view showing gain characteristics of amplifiers constituting the processing circuit that are controlled by the gain control circuit on the basis of first and second switch signals in a case where a CD is selected by the mode control circuit illustrated in Figs. 4 through 6.

Description of the Preferred Embodiment:

In the manner which is described above, in optical disc drives, it has been developed one in which a special optical pickup unit is mounted in order to enable to record/reproduce data in/from not only the DVD and the CD but also a high definition DVD (HD-DVD). The special optical pickup unit of the type is for carrying out recording or reproducing by selectively using three kinds of laser beams, namely, a laser beam having a middle wavelength (a wavelength band of 650 nm) for the DVD, a laser beam having a long wavelength (a wavelength band of 780 nm) for the CD, and a laser beam having a short wavelength (a wavelength band of 410 nm) for the HD-DVD. The special optical pickup unit is called a three-wavelength handling optical pickup unit.

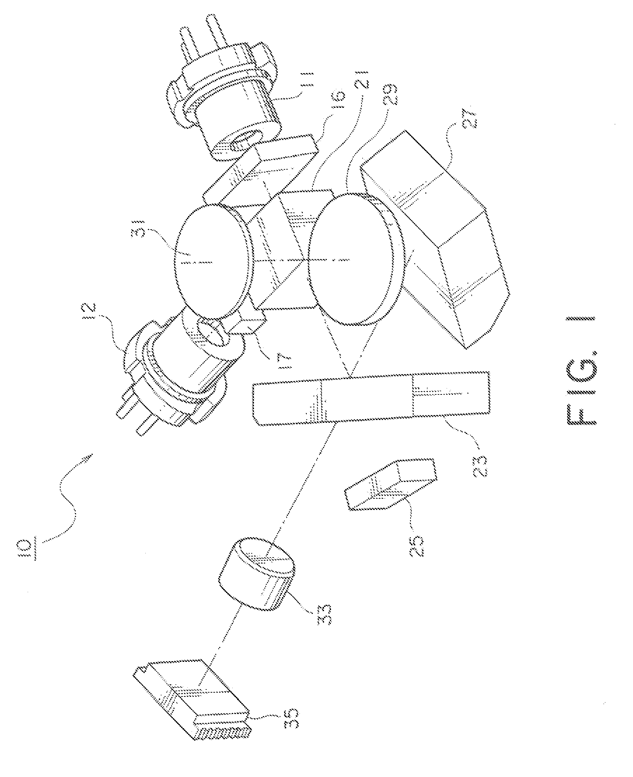

Fig. 1 is a system configuration view of an optical system of the three-wavelength handling optical pickup unit depicted at 10 according to an embodiment of this invention. The illustrated three-wavelength handling optical pickup unit 10 comprises, as laser sources for irradiating leaser beams, a one-chip type laser diode 11 and a blue laser diode 12.

The one-chip type laser diode 11 comprises, as one part (one chip), a first laser diode (not shown) and a second laser diode (not shown). The first laser diode (a first emission point) and the second laser diode (a second emission point) are apart from each other by a predetermined distance of, for example, 100μm. The first laser diode is a laser diode for emitting or irradiating a first laser beam having, as a first wavelength, a wavelength of about 780 nm for the CD. The first laser diode is called a "CD-LD" for short. The second laser diode is a laser diode for emitting or irradiating a second laser beam having, as a second wavelength, a wavelength of about 650 nm for the DVD. The second laser diode is called a "DVD-LD" for short. The blue laser diode 12 is called a third laser diode which is a laser diode for emitting or irradiating a third laser beam having, as a third wavelength, a wavelength of about 410 nm for the HD-DVD (HD). The third laser diode is called a "HD-LD" for short.

The three-wavelength handling optical pickup unit 10 comprises an optical system for guiding any one of the first through the third laser beams to an optical disc (not shown) and for guiding its reflected beam to a photodetector 35 (which will later be described). In addition, the optical system includes an objective lens 31 disposed so as to face the optical disc. The laser beam sources 11, 12 and the photodetector 35 are mounted on an outer side wall of an optical base (which will later be described) while the optical system except for the objective lens 31 is mounted in the optical base.

On the other hand, the objective lens 31 is mounted in an objective lens driving device (an optical pickup actuator). The objective lens driving device elastically supports an objective lens holder holding the objective lens 31 by a plurality of suspension wires with respect to a damper base.

The illustrated three-wavelength handling optical pickup unit 10 comprises, as the optical system, first and second diffraction gratings 16 and 17, a first beam splitter 21, a second beam splitter 23, a front monitor 25, a rising mirror (a total reflection mirror) 27, a collimator lens 29, the above-mentioned objective lens 31, and a sensor lens (detection lens) 33.

A combination of the first diffraction grating 16, the first beam splitter 21, the second beam splitter 23, the rising mirror 27, the collimator lens 29, the objective lens 31, and the sensor lens 33 serves as first or second optical systems for guiding the first or the second laser beams irradiated from the first or the second laser diodes to the optical disc (the CD or the DVD) and for transmitting first or second return beams reflected from the optical disc to guide the photodetector 35. Likewise, a combination of the second diffraction grating 17, the first beam splitter 21, the second beam splitter 23, the rising mirror 27, the collimator lens 29, the objective lens 31, and the sensor lens 33 serves as a third optical system for guiding the third laser beam irradiated from the blue laser diode (the third laser diode) 12 to the optical disc (the HD-DVD) and for transmitting a third return beam reflected from the optical disc to guide the photodetector 35.

The blue laser diode (the third laser diode) 12 is disposed in a center of an optical axis and the second laser diode in the one-chip type laser diode 11 is disposed in the center of the optical axis. Accordingly, the first laser diode in the one-chip type laser diode 11 is disposed at a state shifted from the optical axis. Therefore, the illustrated photo-detector 35 is composed so as to receive the first return beam from the CD with it shifted from the optical axis.

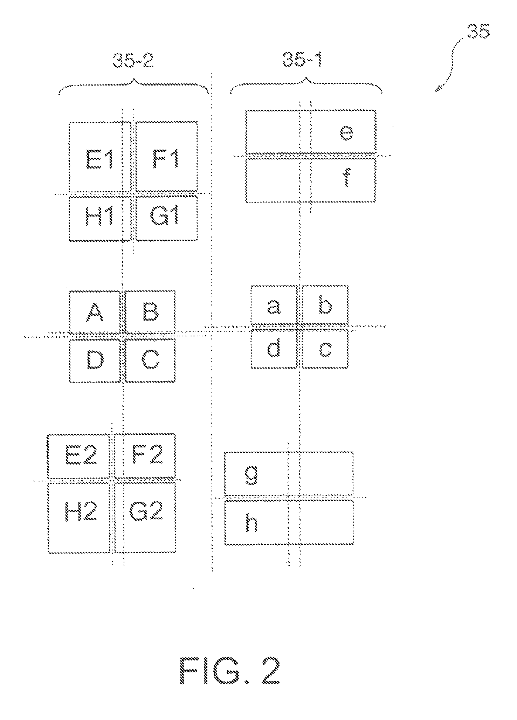

Fig. 2 shows a structure of the photodetector 35 used in the three-wavelength handling optical pickup unit 10 illustrated in Fig. 1. The photodetector 35 comprises a first photo-receiving portion 35-1 for receiving the first return beam and a second photo-receiving portion 35-2 for receiving the second or the third return beams.

The first photo-receiving portion 35-1 comprises four divided photo-diodes a, b, c, and d for receiving a central ray bundle (a main beam) and four photo-diodes e, f, g, and h for receiving both side two ray bundles (two sub beams). The four divided photo-diodes a, b, c, and d for receiving the main beam are called a group of main photo-receiving elements while the four photo-diodes e, f, g, and h for receiving the two sub beams are called a group of sub photo-receiving elements.

The group of the main photo-receiving elements a, b, c, and d receive the main beam to produce primary main photo-received signals. The group of the sub photo-receiving elements receive the two sub beams to produce primary sub photo-received signals.

The second photo-receiving portion 35-2 comprises four divided photo-diodes A, B, C, and D for receiving a central ray bundle (a main beam), a first set of four photo-diodes E1, F1, G1, and H1 for receiving a first sub-beam (a leading sub-beam), and a second set of four photo-diodes E2, F2, G2, and H2 for receiving a second sub-beam (a trailing sub-beam). The four divided photo-diodes A, B, C, and D for receiving the main beam are called a group of main photo-receiving elements. The first set of four photo-diodes E1, F1, G1, and H1 for receiving the leading sub beam are called a group of leading sub photo-receiving elements. The second set of four photo-diodes E2, F2, G2, and H2 for receiving the trailing sub beam are called a group of trailing sub photo-receiving elements.

The group of the main photo-receiving elements A, B, C, and D receive the main beam to produce subsidiary main photo-received signals. The group of the leading sub photo-receiving elements E1, F1, G1, and H1 receive the leading sub beam to produce leading sub photo-received signals. The group of the trailing sub photo-receiving elements E2, F2, G2, and H2 receive the trailing sub beam to produce trailing sub photo-received signals.

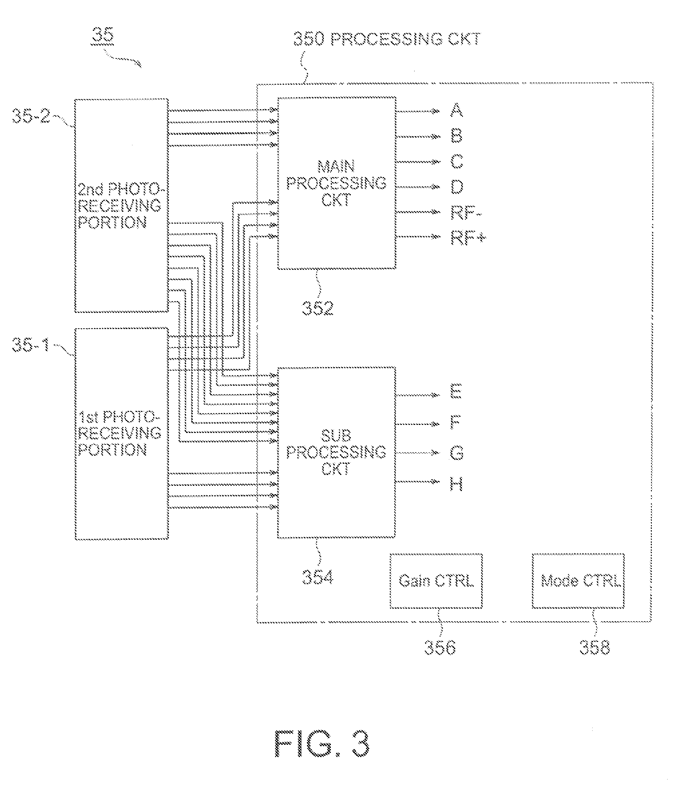

In addition, the photodetector 35 comprises a processing circuit 350 (Fig. 3) for processing photo-received signals which are received by the first and the second photo-receiving portions 35-1 and 35-2 in the manner which will later be described.

In the illustrated three-wavelength handling optical pickup unit 10, a three beam method is used as a tracking servo method for the CD, a one beam method is used as a tracking servo method for the DVD, and a DPP method is used as a tracking servo method for HD-DVD. Accordingly, when the optical disc is the HD-DVD, in the second receiving portion 35-2 of the photodetector 35, the third return beam is received in the above-mentioned group of main photo-receiving elements A, B, C, and D, the above-mentioned group of leading sub photo-receiving elements E1, F1, G1, and H1, and the above-mentioned group of trailing sub photo-receiving elements E2, F2, G2, and H2. On the other hand, when the optical disc is the DVD, in the second receiving portion 35-2 of the photodetector 35, the second return beam is received in only the above-mentioned group of main photo-receiving elements A, B, C, and D.

Now, description will be made as regards operation of the three-wavelength handling optical pickup unit 10 illustrated in Fig. 1. In the manner which is well known in the art, although the three-wavelength handling optical pickup unit 10 is operable at one of a writing mode and a reproducing mode, the description will be made as regards operation in a case of the reproducing mode.

First, description will be made as regards operation in a case where the CD is used as the optical disc. In this event, only the first laser diode (CD-LD) in the one-chip type laser diode 11 is put into an active state while the second laser diode (DVD-LD) in the one-chip type laser diode 11 and the blue laser diode (the third laser diode) 12 (HD-LD) are put into an inactive state.

The first laser beam irradiated from the first laser diode (CD-LD) passes through the first diffraction grating 16 at which the first laser beam is separated to three laser beams in order to carry out a tracking control, a focusing control, and a tilting control. Thereafter, the three laser beams pass through the first beam splitter 21 and enter the second beam splitter 23 as incoming beams. In the incoming beams, a part passes through the second beam splitter 23 and its through-beam is received by the front monitor 25. At any rate, the front monitor 25 monitors a light-emitting amount of the first laser beam which passes through the second beam splitter 23. On the other hand, in the incoming beams, a reflected beam, which is reflected by the second beam splitter 23, is reflected by the rising mirror 27 upward. When the laser beam reflected by the rising mirror 27 passes through the collimator lens 29, the laser beam, which is a diverged beam, is collimated into a collimated beam. The collimated beam enters the objective lens 30. Passed through the objective lens 30, the laser beam is converged and irradiated on a signal recording surface of the optical disc (the CD).

Reflected by the signal recording surface of the optical disc (the CD), a reflected beam (the first return beam) passes through the objective lens 31 and becomes a converged beam after passing through the collimator lens 29. After reflected by the rising mirror 27, the converged beam passes through the second beam splitter 23. After passing through the sensor lens 33, the converted beam is detected by the first photo-receiving portion 35-1 (Fig. 2) of the photodetector 35.

Secondly, description will be made as regards operation in a case where the DVD is used as the optical disc. In this event, only the second laser diode (DVD-LD) in the one-chip type laser diode 11 is put into an active state while the first laser diode (CD-LD) in the one-chip type laser diode 11 and the blue laser diode (the third laser diode) 12 (HD-LD) are put into an inactive state.

The second laser beam irradiated from the second laser diode (DVD-LD) passes through the first diffraction grating 16. Thereafter, the second laser beam passes through the first beam splitter 21 and enters the second beam splitter 23 as an incoming beam. In the incoming beam, a part passes through the second beam splitter 23 and its through-beam is received by the front monitor 25. At any rate, the front monitor 25 monitors a light-emitting amount of the second laser beam which passes through the second beam splitter 23. On the other hand, in the incoming beam, a reflected beam, which is reflected by the second beam splitter 23, is reflected by the rising mirror 27 upward. When the laser beam reflected by the rising mirror 27 passes through the collimator lens 29, the laser beam, which is a diverged beam, is collimated into a collimated beam. The collimated beam enters the objective lens 30. Passed through the objective lens 30, the laser beam is converged and irradiated on a signal recording surface of the optical disc (the DVD).

Reflected by the signal recording surface of the optical disc (the DVD), a reflected beam (the first second beam) passes through the objective lens 31 and becomes a converged beam after passing through the collimator lens 29. After reflected by the rising mirror 27, the converged beam passes through the second beam splitter 23. After passing through the sensor lens 33, the converted beam is detected by the second photo-receiving portion 35-2 (Fig. 2) of the photodetector 35.

Lastly, description will be made as regards operation in a case where the HD-DVD is used as the optical disc. In this event, only the blue laser diode (the third laser diode) 12 (HD-LD) is put into an active state while the first laser diode (CD-LD) and the second laser diode (DVD-LD) in the one-chip type laser diode 11 are put into an inactive state.

The third laser beam irradiated from the blue laser diode (the third laser diode) 12 (HD-LD) passes through the second diffraction grating 17 at which the third laser beam is separated to three laser beams in order to carry out the tracking control, the focusing control, and the tilting control. Thereafter, the three laser beams are reflected by the first beam splitter 21 and enter the second beam splitter 23 as incoming beams. In the incoming beams, a part passes through the second beam splitter 23 and its through-beam is received by the front monitor 25. At any rate, the front monitor 25 monitors a light-emitting amount of the third laser beam which passes through the second beam splitter 23. On the other hand, in the incoming beams, a reflected beam, which is reflected by the second beam splitter 23, is reflected by the rising mirror 27 upward. When the laser beam reflected by the rising mirror 27 passes through the collimator lens 29, the laser beam, which is a diverged beam, is collimated into a collimated beam. The collimated beam enters the objective lens 31. Passed through the objective lens 31, the laser beam is converged and irradiated on a signal recording surface of the optical disc (the HD-DVD).

Reflected by the signal recording surface of the optical disc (the HD-DVD), a reflected beam (the third return beam) passes through the objective lens 31 and becomes a converged beam after passing through the collimator lens 29. After reflected by the rising mirror 27, the converged beam passes through the second beam splitter 23. After passing through the sensor lens 33, the converted beam is detected by the second photo-receiving portion 35-2 (Fig. 2) of the photodetector 35.

Fig. 3 is a block diagram of the photodetector 35. The photodetector 35 comprises the processing circuit 350 for processing the photo-received signals which are received in the first and the second receiving portions 35-1 and 35-2. The processing circuit 350 comprises a main processing circuit 352, a sub processing circuit 354, a gain control circuit 356, and a mode control circuit 358. The main processing circuit 352 processes the primary main photo-received signals or the subsidiary main photo-received signals to produce primary main processed signals or subsidiary processed signals. The sub processing circuit 354 processes the primary sub photo-received signals or the leading sub photo-received signals and the trailing sub photo-received signals to produce primary sub processed signals or subsidiary sub processed signals.

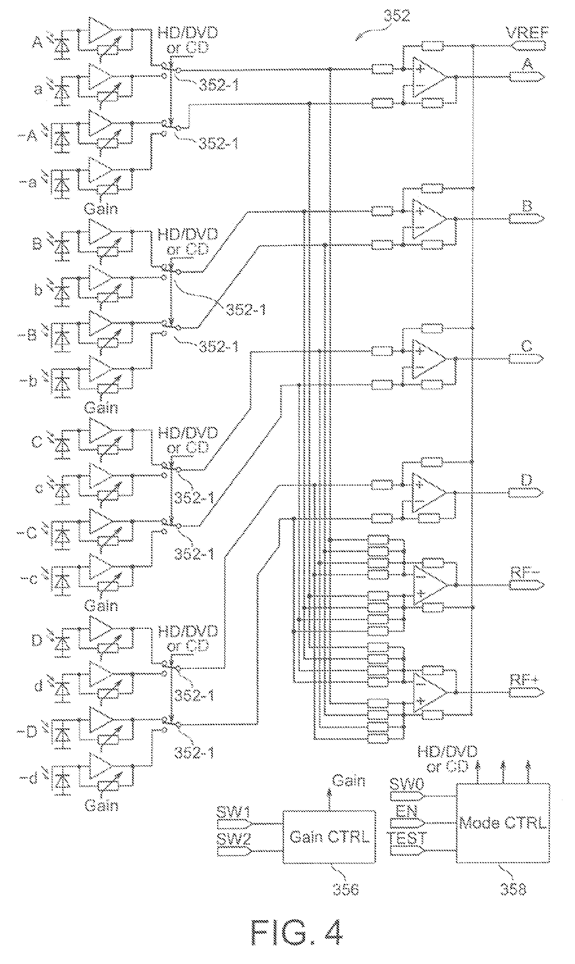

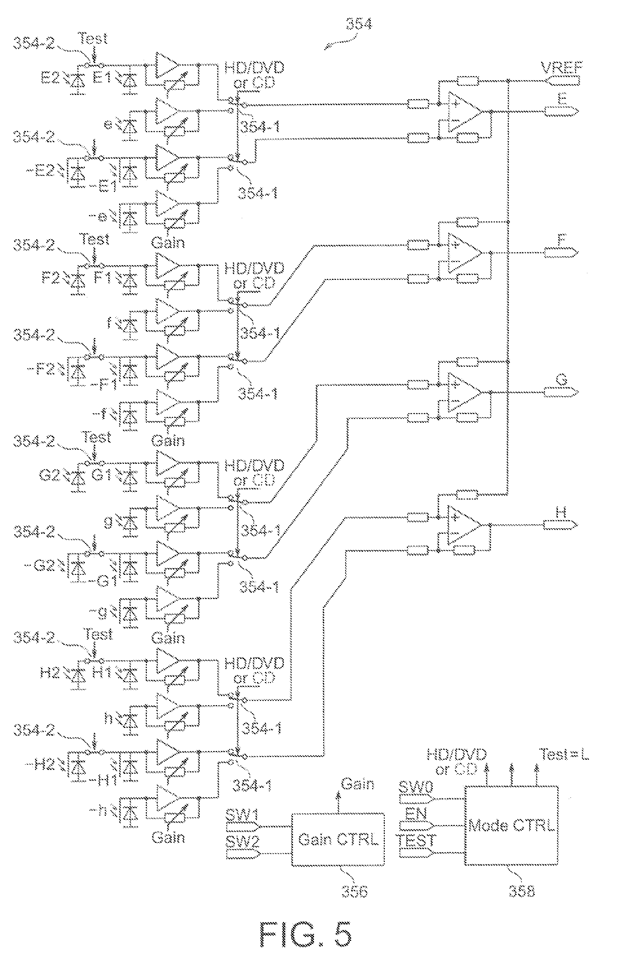

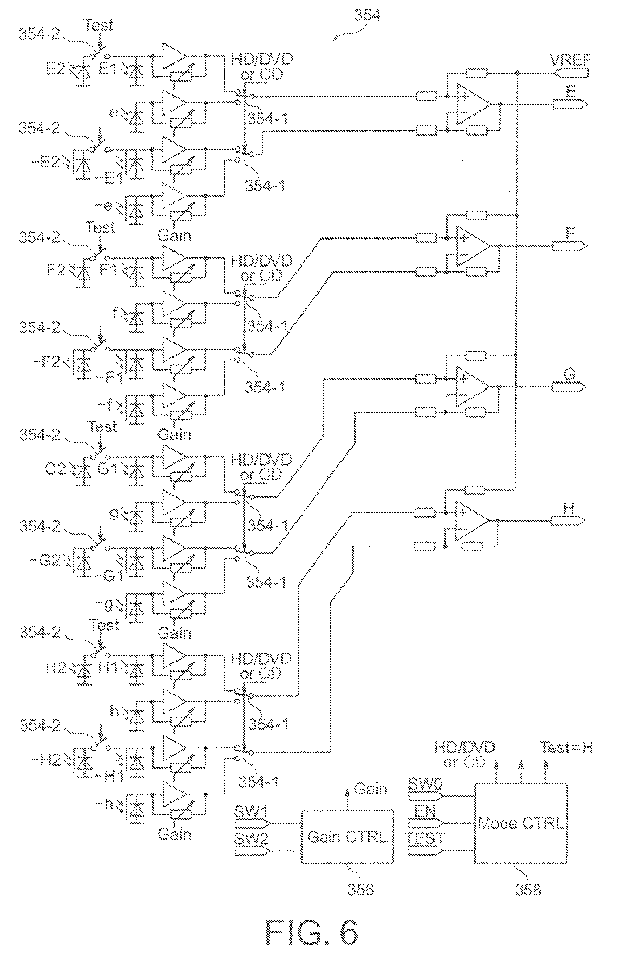

Fig. 4 is a block diagram showing the main processing circuit 352 together with the gain control circuit 356 and the mode control circuit 358. Fig. 5 is a block diagram showing the sub processing circuit 354 in a normal mode together with the gain control circuit 356 and the mode control circuit 358. Fig. 6 is a block diagram showing the sub processing circuit 354 in a test mode together with the gain control circuit 356 and the mode control circuit 358.

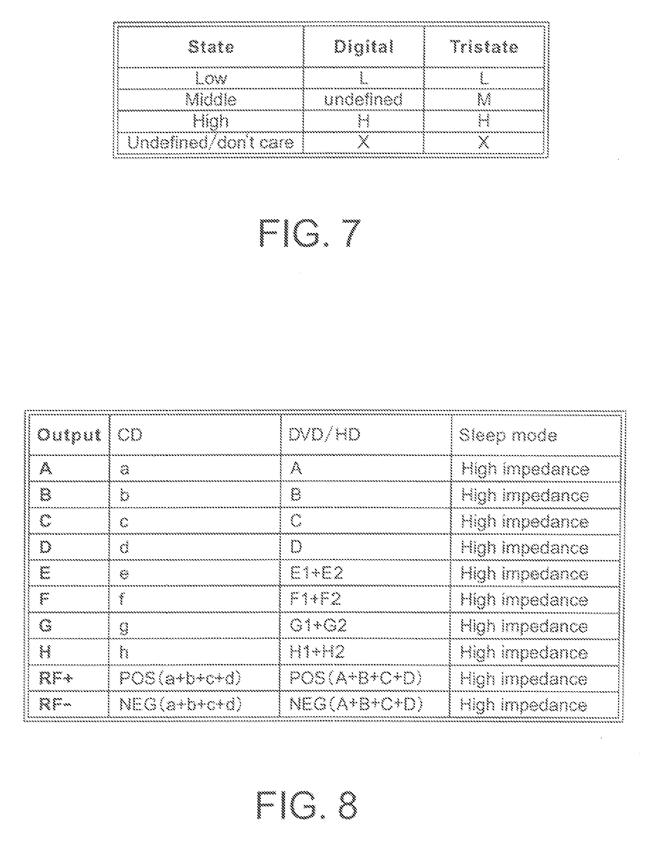

Fig. 7 is a view showing a truth table of signal levels. In a digital (a binary state), L represents a logic low level and H represents a logic high level. In a tristate (a ternary state), L represents a logic low level, M represents a logjc middle level, and H represents a logic high level.

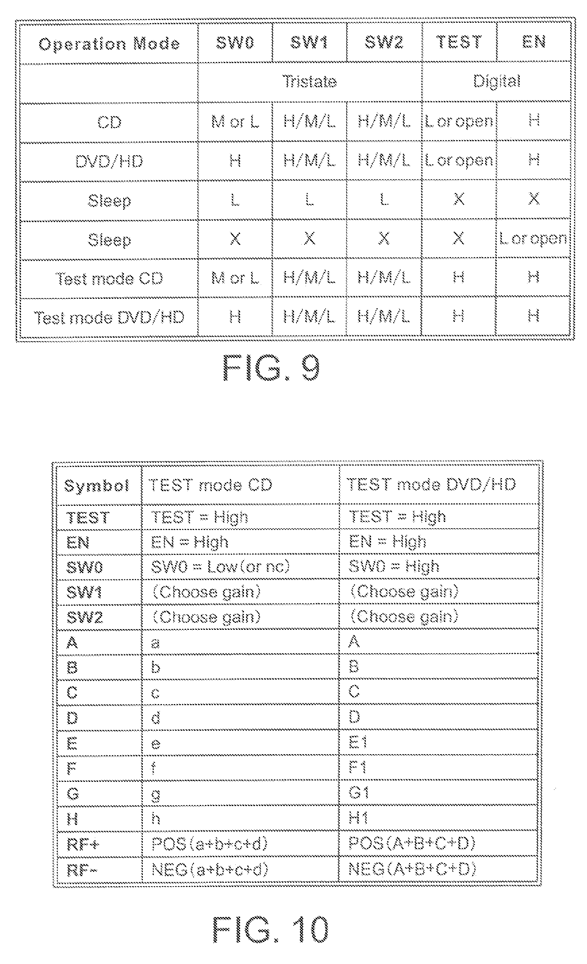

Fig. 8 is a view showing output signals produced by the processing circuit 350 of the photodetector 35 in the normal mode. Fig. 9 is a view showing a relationship between input signals supplied with the processing circuit 350 of the photodetector 35 and an operation mode. Fig. 10 is a view showing output signals produced by the processing circuit 350 of the photodetector 35 in the test mode.

The mode control circuit 358 controls a mode of the processing circuit 350 in response to a zero-th switch signal SW0, a sleep mode signal EN, and a test mode signal TEST. The gain control circuit 356 controls gains of amplifiers constituting the processing circuit 350 on the basis of first and second switch signals SW1 and SW2. As shown in Fig. 9, each of the zero-th through the second switch signals SW0, SW1, and SW2 is a binary signal while each of the sleep mode signal EN and the test mode signal TEST is a ternary signal.

Referring to Figs. 4 and 8, the description will proceed to the main processing circuit 352. Fig. 4 shows the main processing circuit 352 in a case where the HD (HD-DVD) or the DVD is selected by the mode control circuit 358. In this event, a group of medium selection switches 352-1 constituting the main processing circuit 352 are switched in an upward direction. Under the circumstances, the main processing circuit 352 processes the subsidiary main photo-received signals received in the group of the main photo-receiving elements A, B, C, and D of the second photo-receiving portion 35-2 to produce the subsidiary main processed signals A, B, C, and D for the HD (HD-DVD) or the DVD from output terminals A, B, C, and D, respectively.

On the other hand, when the CD is selected by the mode control circuit 358, the group of medium selection switches 352-1 constituting the main processing circuit 352 are switched in a downward direction. Under the circumstances, the main processing circuit 352 processes the primary main photo-received signal received in the group of the main photo-receiving elements a, b, c, and d of the first photo-receiving portion 35-1 to produce the primary main processed signals a, b, c, and d for the CD from the output terminals A, B, C, and D, respectively.

Referring to Figs. 5 and 8, the description will proceed to the sub processing circuit 354 in the normal mode. Fig. 5 shows the sub processing circuit 354 in a case where the mode control circuit 358 selects the HD (HD-DVD) or the VDV and selects the normal mode. In this event, a group of medium selection switches 354-1 constituting the sub processing circuit 354 are swiched in an upward direction and a group of test selection switches 354-2 are closed. Accordingly, as shown in Fig. 5, the group of leading sub photo-receiving elements E1, F1, G1, and H1 and the group of trailing sub photo-recivign elements E2, F2, G2, and H2 are connected in parallel with each other, respectively. As a result, the sub processing circuit 354 adds the leading sub photo-received signals received in the group of leading sub photo-receiving elements E1, F1, G1, and H1 of the second photo-receiving portion 35-2 and the trailing sub photo-received signals received in the group of trailing sub photo-receiving elements E2, F2, G2, and H2 to produce the subsidiary sub processed signals (E1 + E1), (F1 + F2), (G1 + G2), and (H1 +H2) for the HD (HD0DVD) or the DVD from output terminals E, F, G, and H, respectively.

On the other hand, when the CD is selected by the mode control circuit 358, the group of medium selection switches 354-1 constituting the sub processing circuit 354 are switched in a downward direction. Therefore, the sub processing circuit 354 processes the primary sub photo-received signals received in the group of sub photo-receiving elements e, f, g, and h of the first photo-receiving portion 35-1 to produce the primary sub processed signals e, f, g, and h for the CD from the output terminals E, F, G, and H, respectively.

In the manner which is described above, in the normal mode, the photodetector 35 produces, as the subsidiary sub processed signals, from the output terminals E, F, G, and H, added signals (E1 + E2), (F1 + F2), (G1 + G2), and (H1 + H2) obtained by adding the leading sub photo-received signals E1, F1, G1, and H1 and the trailing sub photo-received signals E2, F2, G2, and H2, respectively.

Produced by the photodetector 35, the output signals are sent to an OPU circuit board (not shown) mounted on an optical base (not shown) through a PD flexible printed board (not shown). The OPU circuit board comprises a calculating circuit (not shown) for calculating the outout signals of the photodetector 35 to produce a tracking error signal DPP. The calculating circuit calculates the tracking error signal DPP on the basis of a following equation:

$$DPP = (A + B) - (C + D) - k[(E + F) - (G + H)],$$

where k represents a constant for compensating an optical strength difference between the main beam and the sub beams, $E = E1 + E2$, $F = F1 + F2$, $G = G1 + G2$, and $H = H1 + H2$. Specifically, the tracking error signal DPP is obtained by multiplying the constant k by a signal obtained by adding a leading push-pull signal $\{(E1 + F1) - (G1 - H1)\}$ and a trailing push-pull signal $\{(E2 + F2) - (G2 + H2)\}$ and by subtracting a multiplied signal from a main push-pull signal $\{(A + B) - (C + D)\}$.

On the other hand, in the manner which is described above, on phase-adjustment in the assembly process of the optical pickup unit, it is necessary to adjust the second diffraction grating 17 so that the phase difference between the main beam (the main photo-received signal A) and the leading sub beam (the leading sub photo-received signal E1) becomes 180 degrees.

However, in the normal mode, it is impossible to pull, as the output signals produced by the photodetector 35, only the leading sub received signal E1 related to the leading sub beam out. This is because the photodetector 35 produces the added signal E obtained by adding the leading sub received signal E1 related to the leading sub beam and the trailing sub received signal E2 related to the trailing sub beam. Therefore, a phase adjustment must be carried out using the main processed signal A and the added signal E. In this event, it is difficult to correctly phase-adjust so that the phase difference between the main beam and the leading sub beam becomes 180 degrees because the added signal E includes a phase signal for the trailing sub beam.

Therefore, in this invention, it is possible to set the sub processing circuit 354 in the test mode as shown in Fig. 6.

Referring now to Figs. 6 and 10, the description will proceed to the sub processing circuit 354 in the test mode. Fig. 6 shows the sub processing circuit 354 in a case where the mode control circuit 358 selects the HD (HD-DVD) or the VDV and selects the test mode. In this event, the group of medium selection switches 354-1 constituting the sub processing circuit 354 are switched in the upward direction and the group of test selection switches 354-2 are opened. Accordingly, as shown in Fig. 6, the group of trailing sub photo-receiving elements E2, F2, G2, and H2 are detached from the group of leading sub photo-receiving elements E1, F1, G1, and H1, respectively. As a result, the sub processing circuit 354 processes only the leading sub photo-received signals received in the group of leading sub photo-receiving elements E1, F1, G1, and H1 of the second photo-receiving portion 35-2 to produce the subsidiary sub processed signals E1, F1, G1, and H1 for the HD (HD-DVD) or the DVD from the output terminals E, F, G, and H, respectively.

On the other hand, when the CD is selected by the mode control circuit 358, the group of medium selection switches 354-1 constituting the sub processing circuit 354 is switched in the downward direction. Therefore, the sub processing circuit 354 processes the primary sub photo-received signals received in the group of sub photo-receiving elements e, f, g, and h of the first photo-receiving portion 35-1 to produce the primary sub processed signals e, f, g, and h for the CD from the output terminals E, F, G, and H, respectively.

In the manner which is described above, in the test mode, the photodetector 35 produces, as the subsidiary sub processed signals, from the output terminals E, F, G, and H, the signals E1, F1, G1, and H1 obtained by processing only the leading sub photo-received signals.

Accordingly, it is possible to phase-adjust the second diffraction grating 17 so that the phase difference between the main photo-received signal A and the leading sub photo-received signal E1 becomes 180 degrees.

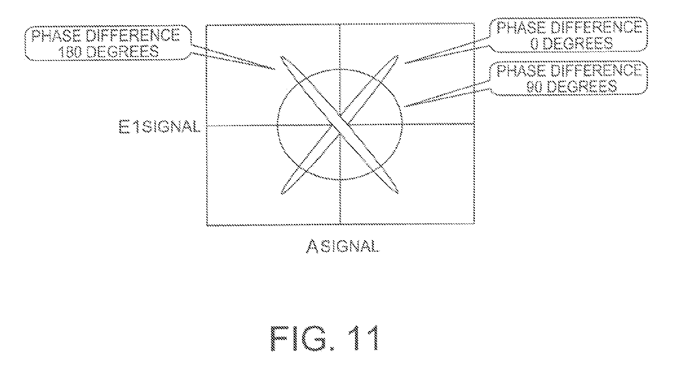

On carrying out adjustment of the second diffraction grating 17, the adjustment is carried out by supplying an oscilloscope with the main photo-received signal A related to the main beam that is produced by the output terminal A of the photodetector 35 and the leading sub photo-received signal E1 related to the sub beam that is produced by the output terminal E of the photodetector 35 and by making the oscilloscope display Lissajous figure on a screen thereof as shown in Fig. 11.

In Fig. 11, a lateral axis (or the abscissa) represents the main photo-received signal A while a longitudinal axis (or the ordinate) represents the leading sub photo-received signal E1. When a linear figure is displayed in the first and the third quadrants of the screen of the oscilloscope, it indicates that the phase difference between the main photo-received signal A and the leading sub photo-received signal E1 is equal to 0 degree. When a circular figure is displayed in the first through the fourth quadrants of the screen of the oscilloscope, it indicates that the phase difference between the main photo-received signal A and the leading sub photo-received signal E1 is equal to 90 degrees. When a linear figure is displayed in the second and the fourth quadrants of the screen of the oscilloscope, it indicates that the phase difference between the main photo-received signal A and the leading sub received signal E1 is equal to 180 degrees.

When operation is carried out in only the normal mode in the conventional photodetector, the output terminal E of the photodetector produces the added signal (E1 + E2) obtained by adding the leading sub photo-received signal E1 and the trailing sub photo-received signal E2, As a result, it is impossible to display clear Lissajous figure on the screen of the oscilloscope because frequency components of the leading sub photo-received signal E1 and the trailing sub photo-received signal E2 have an influence on each other.

In contrast, inasmuch the photodetector 35 according to the embodiment of this invention can produce only the leading sub photo-received signal E1 from the output terminal E in the test mode, it is possible to display clear Lissajous figure on the screen of the oscilloscope with stability. As a result, it is possible to easily carry out the adjustment of the second diffraction grating 17.

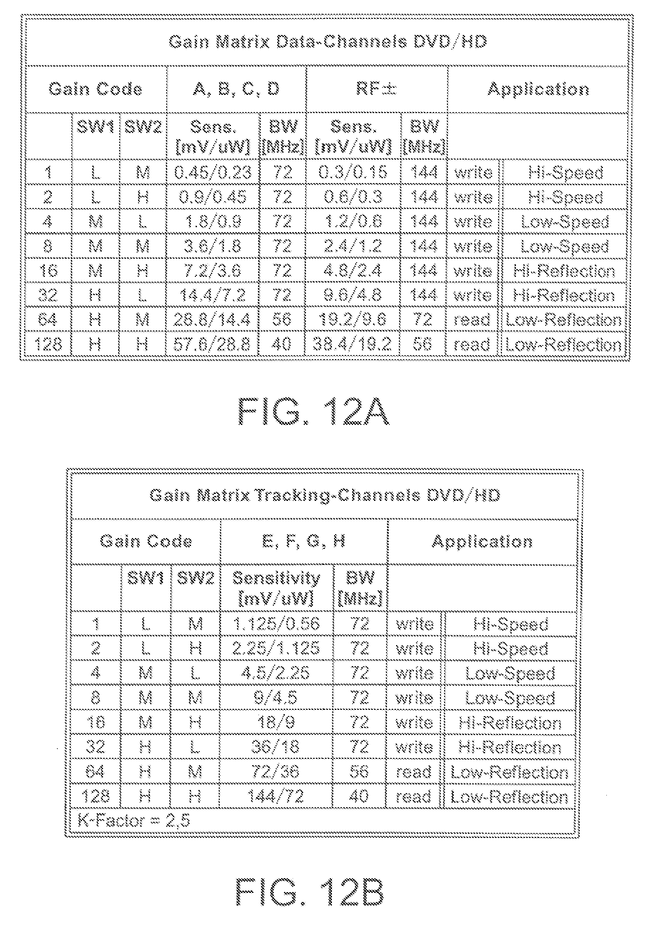

Figs. 12 A and 12B collectively show gain characteristics of the amplifiers constituting the processing circuit 350 that are controlled by the gain control circuit 356 on the basis of the first and the second switch signals SW1 and SW2 in a case where the HD (HD-DVD) or the DVD is selected by the mode control circuit 358.

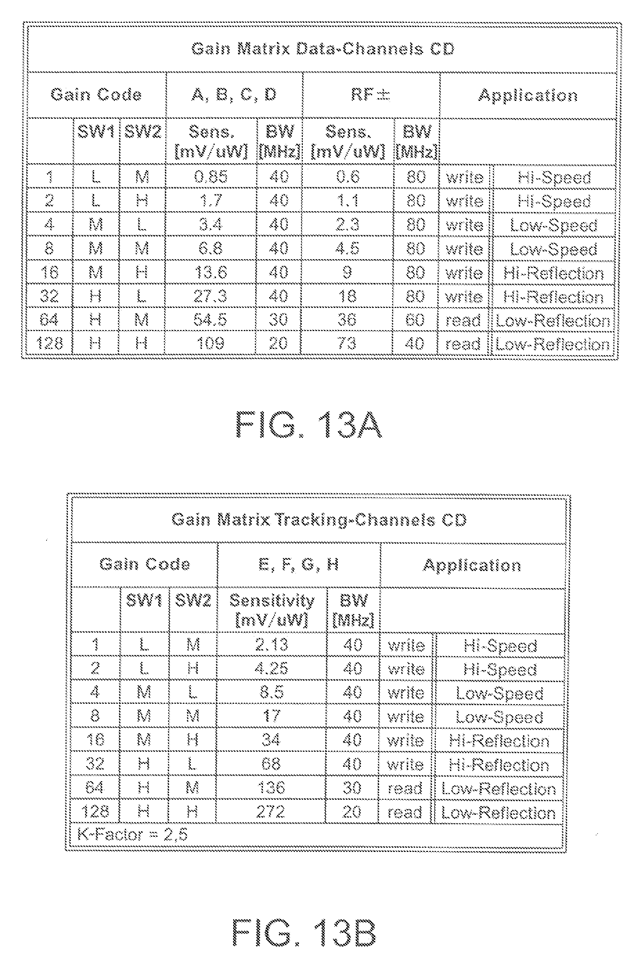

Figs. 13A and 13B collectively show gain characteristics of the amplifiers constituting the processing circuit 350 that are controlled by the gain control circuit 356 on the basis of the first and the second switch signals SW1 and SW2 in a case where the CD is selected by the mode control circuit 358.

As apparent from Figs. 12A, 12B, 13A, and 13B, it is understood that the gains of the amplifiers constituting the processing circuit 350 are controlled by values of the switch signals SW1 and SW2 and a sensitivity-frequency characteristic of the photodetector 35 is switched in eight stages.

While this invention has thus far been described in conjunction with a preferred embodiment thereof, it will now be readily possible for those skilled in the art to put this invention into various other manners without departing from the scope of this invention. For example, although description is exemplified in a case where the HD-DVD is used as the optical disc for the blue laser beam, a Blu-ray disc may be used in lieu of the HD-DVD. Needless to say, this invention is not restricted to the three-wavelength handling optical pickup units, this invention may be applicable to various types of optical pickup units.

**Claims**

1. A photodetector (35) comprising a photo-receiving portion (35-2) for receiving a return beam from an optical disc, said return beam comprising a main beam, a leading sub beam, and a trailing sub beam, said photo-receiving portion comprising a group of main photo-receiving elements (A, B, C, D) for receiving the main beam to produce main photo-received signals, a group of leading sub photo-receiving elements (E1, F1, G1, H1) for receiving the leading sub beam to produce leading sub photo-received signals, and a group of trailing sub photo-receiving elements (E2, F2, G2, H2) for receiving the trailing sub beam to produce trailing sub photo-received signals; and a processing circuit (350) for processing the main photo-received signals, the leading sub photo-received signals, and the trailing sub photo-received signals to produce main processed signals and sub processed signals, **characterized in that** said processing circuit (350) is configured to produce, in a normal mode, as the sub processed signals, added signals ((E1 + E2), (F1 + F2), (G1 + G2), (H1 + H2)) obtained by adding the leading sub photo-received signals and the trailing sub photo-received signals and to produce, in a test mode, as the sub processed signals, signals (E1, F1, G1, H1) obtained by processing only the leading sub photo-received signals.

2. The photodetector as claimed in claim 1, wherein said processing circuit (350) comprises:

   a main processing circuit (352) for processing the main photo-received signals to produce the main processed signals; and
   a sub processing circuit (354) for processing the leading sub photo-received signals and the trailing sub photo-received signals to produce the sub processed signals, said sub processing circuit (354) producing, in said normal mode, as the sub processed signals, the added signals ((E1 + E2), (F1 + F2), (G1 + G2), (H1 + H2)) obtained by adding the leading sub photo-received signals and the trailing sub photo-received signals by connecting the group of the leading sub photo-receiving elements (E1, F1, G1, H1) in parallel with the group of the trailing sub photo-receiving elements (E2, F1, G, H1), said sub processing circuit (354) producing, in said test mode, as the sub processed signals, the signals (E1, F1, G1, H1) obtained by processing only the leading sub photo-received signals by detaching the group of the trailing sub photo-receiving elements (E2, F2, G2, H2) from the group of the leading sub photo-receiving elements (E1, F1, G1, H1).

3. An optical pickup unit (10) using a differential push-pull (DPP) method as a tracking servo method, comprising a laser beam source (12) for irradiating a laser beam as an irradiated beam, a photodetector (35), and an optical system for guiding the irradiated beam to an optical disc and for guiding its reflected beam to said photodetector as a return beam, said optical system including a diffraction grating (17) for dividing the irradiated beam into a main beam, a leading sub beam, and a trailing sub beam and an objective lens (31) disposed so as to face said optical disc, said photodetector (35) comprises a photo-receiving portion (35-2) for receiving said return beam, said photo-receiving portion (35-2) comprising a group of main photo-receiving elements (A, B, C, D) for receiving the main beam to produce main photo-received signals, a group of leading sub photo-receiving elements (E1, F1, G1, H1) for receiving the leading sub beam to produce leading sub photo-received signals, and a group of trailing sub photo-receiving elements (E2, F2, G2, H2) for receiving the trailing sub beam to produce trailing sub photo-received signals, and a processing circuit (350) for processing the main photo-received signals, the leading sub photo-received signals, and the trailing sub photo-received signals to produce main processed signals and sub processed signals, **characterized in that** said processing circuit (350) is configured to produce, in a normal mode, as the sub processed signals, added signals ((E1 + E2), (F1 + F2), (G1 + G2), (H1 + H2)) obtained by adding the leading sub photo-received signals and the trailing sub photo-received signals and to produce, in a test mode, as the sub processed signals, signals (E1, F1, G1, H1) obtained by processing only the leading sub photo-received signals.

4. The optical pickup unit as claimed in claim 3, wherein said processing circuit (350) comprises:

a main processing circuit (352) for processing the main photo-received signals to produce the main processed signals; and

a sub processing circuit (354) for processing the leading sub photo-received signals and the trailing sub photo-received signals to produce the sub processed signals, said sub processing circuit (354) producing, in said normal mode, as the sub processed signals, the added signals ((E1 + E2), (F1 + F2), (G1 + G2), (H1 + H2)) obtained by adding the leading sub photo-received signals and the trailing sub photo-received signals by connecting the group of the leading sub photo-receiving elements (E1, F1, G1, H1) in parallel with the group of the trailing sub photo-receiving elements (E2, F2, G2, H2), said sub processing circuit (354) producing, in said test mode, as the sub processed signals, the signals (E1, F1, G1, H 1) obtained by processing only the leading sub photo-received signals by detaching the group of the trailing sub photo-receiving elements (E2, F2, G2, H2) from the group of the leading sub photo-receiving elements (E1, F1, G1, H1).

FIG. 1

FIG. 2

FIG. 3

FIG. 4

FIG. 5

FIG. 6

| State | Digital | Tristate |
|---|---|---|
| Low | L | L |
| Middle | undefined | M |
| High | H | H |
| Undefined/don't care | X | X |

# FIG. 7

| Output | CD | DVD/HD | Sleep mode |
|---|---|---|---|
| A | a | A | High impedance |
| B | b | B | High impedance |
| C | c | C | High impedance |
| D | d | D | High impedance |
| E | e | E1+E2 | High impedance |
| F | f | F1+F2 | High impedance |
| G | g | G1+G2 | High impedance |
| H | h | H1+H2 | High impedance |
| RF+ | POS(a+b+c+d) | POS(A+B+C+D) | High impedance |
| RF- | NEG(a+b+c+d) | NEG(A+B+C+D) | High impedance |

# FIG. 8

| Operation Mode | SW0 | SW1 | SW2 | TEST | EN |
|---|---|---|---|---|---|
| | Tristate | | | Digital | |
| CD | M or L | H/M/L | H/M/L | L or open | H |
| DVD/HD | H | H/M/L | H/M/L | L or open | H |
| Sleep | L | L | L | X | X |
| Sleep | X | X | X | X | L or open |
| Test mode CD | M or L | H/M/L | H/M/L | H | H |
| Test mode DVD/HD | H | H/M/L | H/M/L | H | H |

## FIG. 9

| Symbol | TEST mode CD | TEST mode DVD/HD |
|---|---|---|
| TEST | TEST = High | TEST = High |
| EN | EN = High | EN = High |
| SW0 | SW0 = Low (or nc) | SW0 = High |
| SW1 | (Choose gain) | (Choose gain) |
| SW2 | (Choose gain) | (Choose gain) |
| A | a | A |
| B | b | B |
| C | c | C |
| D | d | D |
| E | e | E1 |
| F | f | F1 |
| G | g | G1 |
| H | h | H1 |
| RF+ | POS (a+b+c+d) | POS (A+B+C+D) |
| RF- | NEG (a+b+c+d) | NEG (A+B+C+D) |

## FIG. 10

FIG. 11

| Gain Matrix Data-Channels DVD/HD | | | | | | | | |
|---|---|---|---|---|---|---|---|---|
| Gain Code | | | A, B, C, D | | RF± | | Application | |
| | SW1 | SW2 | Sens. [mV/uW] | BW [MHz] | Sens. [mV/uW] | BW [MHz] | | |
| 1 | L | M | 0.45/0.23 | 72 | 0.3/0.15 | 144 | write | Hi-Speed |
| 2 | L | H | 0.9/0.45 | 72 | 0.6/0.3 | 144 | write | Hi-Speed |
| 4 | M | L | 1.8/0.9 | 72 | 1.2/0.6 | 144 | write | Low-Speed |
| 8 | M | M | 3.6/1.8 | 72 | 2.4/1.2 | 144 | write | Low-Speed |
| 16 | M | H | 7.2/3.6 | 72 | 4.8/2.4 | 144 | write | Hi-Reflection |
| 32 | H | L | 14.4/7.2 | 72 | 9.6/4.8 | 144 | write | Hi-Reflection |
| 64 | H | M | 28.8/14.4 | 56 | 19.2/9.6 | 72 | read | Low-Reflection |
| 128 | H | H | 57.6/28.8 | 40 | 38.4/19.2 | 56 | read | Low-Reflection |

FIG. 12A

| Gain Matrix Tracking-Channels DVD/HD | | | | | | |
|---|---|---|---|---|---|---|
| Gain Code | | | E, F, G, H | | Application | |
| | SW1 | SW2 | Sensitivity [mV/uW] | BW [MHz] | | |
| 1 | L | M | 1.125/0.56 | 72 | write | Hi-Speed |
| 2 | L | H | 2.25/1.125 | 72 | write | Hi-Speed |
| 4 | M | L | 4.5/2.25 | 72 | write | Low-Speed |
| 8 | M | M | 9/4.5 | 72 | write | Low-Speed |
| 16 | M | H | 18/9 | 72 | write | Hi-Reflection |
| 32 | H | L | 36/18 | 72 | write | Hi-Reflection |
| 64 | H | M | 72/36 | 56 | read | Low-Reflection |
| 128 | H | H | 144/72 | 40 | read | Low-Reflection |
| K-Factor = 2,5 | | | | | | |

FIG. 12B

| Gain Matrix Data-Channels CD | | | | | | | | |
|---|---|---|---|---|---|---|---|---|
| Gain Code | | | A, B, C, D | | RF ± | | Application | |
| | SW1 | SW2 | Sens. [mV/uW] | BW [MHz] | Sens. [mV/uW] | BW [MHz] | | |
| 1 | L | M | 0.85 | 40 | 0.6 | 80 | write | Hi-Speed |
| 2 | L | H | 1.7 | 40 | 1.1 | 80 | write | Hi-Speed |
| 4 | M | L | 3.4 | 40 | 2.3 | 80 | write | Low-Speed |
| 8 | M | M | 6.8 | 40 | 4.5 | 80 | write | Low-Speed |
| 16 | M | H | 13.6 | 40 | 9 | 80 | write | Hi-Reflection |
| 32 | H | L | 27.3 | 40 | 18 | 80 | write | Hi-Reflection |
| 64 | H | M | 54.5 | 30 | 36 | 60 | read | Low-Reflection |
| 128 | H | H | 109 | 20 | 73 | 40 | read | Low-Reflection |

# FIG. 13A

| Gain Matrix Tracking-Channels CD | | | | | | |
|---|---|---|---|---|---|---|
| Gain Code | | | E, F, G, H | | Application | |
| | SW1 | SW2 | Sensitivity [mV/uW] | BW [MHz] | | |
| 1 | L | M | 2.13 | 40 | write | Hi-Speed |
| 2 | L | H | 4.25 | 40 | write | Hi-Speed |
| 4 | M | L | 8.5 | 40 | write | Low-Speed |
| 8 | M | M | 17 | 40 | write | Low-Speed |
| 16 | M | H | 34 | 40 | write | Hi-Reflection |
| 32 | H | L | 68 | 40 | write | Hi-Reflection |
| 64 | H | M | 136 | 30 | read | Low-Reflection |
| 128 | H | H | 272 | 20 | read | Low-Reflection |
| K-Factor = 2,5 | | | | | | |

# FIG. 13B

**European Patent Office**

**EUROPEAN SEARCH REPORT**

Application Number

EP 07 11 7624

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2001 052355 A (VICTOR COMPANY OF JAPAN) 23 February 2001 (2001-02-23) * page 2, paragraph 2; figure 6 * * page 3, paragraphs 11,12; figure 1 * ----- | 1-4 | INV. G11B7/09 G11B7/22 G11B7/13 |
| A | US 2002/141301 A1 (OHNISHI KUNIKAZU [JP] ET AL) 3 October 2002 (2002-10-03) * the whole document * ----- | 1-4 | ADD. G11B7/135 |
| A | US 5 425 011 A (KUSANO TOSHIAKI [JP] ET AL) 13 June 1995 (1995-06-13) * the whole document * ----- | 1-4 | |
| A | JP 04 366740 A (MITSUBISHI ELECTRIC CORP) 18 December 1992 (1992-12-18) * the whole document * ----- | 1-4 | |
| A | JP 2005 085369 A (FUNAI ELECTRIC CO) 31 March 2005 (2005-03-31) * the whole document * ----- | 1-4 | |

TECHNICAL FIELDS
SEARCHED (IPC)

G11B

The present search report has been drawn up for all claims

| Place of search | Date of completion of the search | Examiner |
|---|---|---|
| The Hague | 21 December 2007 | Lefèbvre, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

### ANNEX TO THE EUROPEAN SEARCH REPORT
### ON EUROPEAN PATENT APPLICATION NO.

EP 07 11 7624

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2007

| Patent document cited in search report | | | Publication date | Patent family member(s) | | Publication date |
|---|---|---|---|---|---|---|
| JP 2001052355 | A | | 23-02-2001 | NONE | | |
| US 2002141301 | A1 | | 03-10-2002 | NONE | | |
| US 5425011 | A | | 13-06-1995 | FR | 2697367 A1 | 29-04-1994 |
| | | | | JP | 2728835 B2 | 18-03-1998 |
| | | | | JP | 6139609 A | 20-05-1994 |
| JP 4366740 | A | | 18-12-1992 | NONE | | |
| JP 2005085369 | A | | 31-03-2005 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006270909 A
- JP 2003173563 A
- JP 11149652 A
- JP 2003196865 A
- JP 2001093177 A
- JP 00193177 A
- JP 2005339646 A
- US 20050265203 A1